# EUROPÄISCHE PATENTANMELDUNG

(11) **EP 4 541 546 A1**
(43) Veröffentlichungstag der Anmeldung: **23.04.2025**
(21) Anmeldenummer: 23204708.4
(22) Anmeldetag: 19.10.2023
(51) Int. Cl.: B29C 33/04, B29C 48/30, B29C 48/91, B29C 48/88, F28D 15/02

(54) **FORMUNGSELEMENT FÜR EIN FERTIGUNGSVERFAHREN**

(71) Anmelder: Siemens Aktiengesellschaft, 80333 München (DE)
(72) Erfinder: KIENER, Christoph, 81369 München (DE); KIY, Michael, 6331 Hünenberg (CH)
(74) Vertreter: Siemens Patent Attorneys

(57) **Zusammenfassung**

Es wird ein Formungselement (10,60) für einen Prozess angegeben, insbesondere für ein Fertigungsverfahren, bei welchem ein zu verarbeitendes Material (M) geformt wird, mit
- einer Prozessfläche (20) zur Formung des Materials (M) und
- einem im Inneren des Formungselements (10,60) angeordneten abgeschlossenen Medienraum (22), in welchem ein fluides Arbeitsmedium (F) nach dem Wirkprinzip eines Wärmerohrs zirkulierbar ist,
- wobei der Medienraum (22) einen Verdampferbereich (26) und einen Kondensatorbereich (24) aufweist, wobei wenigstens einer dieser beiden Bereiche (24,26) thermisch so mit der Prozessfläche (20) gekoppelt ist, dass diese durch das zirkulierende Arbeitsmedium (F) temperierbar ist,
- wobei der Medienraum (22) zur Prozessfläche (20) hin durch ein fluiddichtes erstes Wandelement (31) begrenzt ist,
- wobei der Medienraum (22) eine innenliegende Kapillarstruktur (35) mit einer Mehrzahl an kapillar fluidleitenden Kanälen aufweist.

Weiterhin wird ein Fertigungsverfahren angegeben, bei welchem ein zu verarbeitendes Material (M) mit einem solchen Formungselement (10,60) geformt wird sowie ein Verfahren zur Herstellung eines solchen Formungselements (10,60).

## Beschreibung

Die vorliegende Erfindung betrifft ein Formungselement für einen Prozess, bei welchem ein zu verarbeitendes Material geformt wird, wobei das Formungselement eine Prozessfläche zur Formung des Materials aufweist. Weiterhin betrifft die Erfindung ein Fertigungsverfahren unter Verwendung solch eines Formungselements sowie ein Herstellungsverfahren für ein solches Formungselement.

In der Fertigungstechnik werden vielfältige Verfahrensschritte angewendet, bei denen zu verarbeitende Materialien geformt werden. Dabei kann es sich beispielsweise um Extrusionsschritte handeln, bei denen plastisch verformbare bis dickflüssige Massen unter Druck kontinuierlich aus einer formgebenden Öffnung herausgepresst werden. Eine solche formgebende Öffnung bzw. ein die Öffnung ausbildendes Bauteil wird auch als Extrusionsdüse bezeichnet. Andere Arten von Düsen kommen zur Formung von Flüssigkeits- und/oder Gasströmen zum Einsatz, wobei auch hier eine Zufuhr von Material zu einem Prozess durch einen geformten Materialstrom stattfindet. Weitere Beispiele für Formungselemente in der Fertigungstechnik sind Kalandersysteme, bei denen eine Materialschicht zwischen einem System aus beheizten Walzen hindurchgeführt wird und dabei geformt wird. Diese Walzen werden auch als Kalanderwalzen bezeichnet. Beim sogenannten Schmelzkalandrieren können mit solchen Walzsystemen Folien hergestellt werden. Außerdem werden sogenannte Beschichtungskalander zum Beschichten von bahnförmigen Substraten eingesetzt und/oder es können bestehende Folien bzw. Beschichtungen entsprechend der gewünschten Spezifikation geformt, geglättet, verdichtet bzw. geprägt werden.

Den beschriebenen Verfahren ist gemeinsam, dass ein zu formendes Material durch eine formgebende Öffnung gepresst wird, wobei die Öffnung entweder durch einen innenliegenden Kanal eines Formungselements oder auch durch einen Spalt zwischen mehreren Formungselementen (insbesondere zwischen zwei gegenüberliegenden Walzen) gegeben sein kann. Eine Schwierigkeit bei der Prozessführung in einem solchen Verfahrensschritt besteht allgemein darin, dass die Eigenschaften des gebildeten Produkts (also z.B. einer hergestellten Folie oder einer abgeschiedenen Schicht) häufig sehr empfindlich von der Temperatur des verwendeten Formungselements und insbesondere von der Temperatur seiner Prozessfläche abhängt. So muss z.B. bei einem Extrusionsprozess mit einem geschmolzenen Material typischerweise ein enges Temperaturfenster eingehalten werden, um gleichmäßige Fließeigenschaften und damit ein reproduzierbares Produkt mit homogenen Eigenschaften zu erhalten. Auch bei Beschichtungen mit pastösen Gemischen als Ausgangsmaterialien ist die Temperierung während des Formungsschrittes ein entscheidendes Kriterium für die Homogenität der gebildeten Schicht und für die Einhaltung einer gewünschten Zielschichtdicke. Bei vielen solchen materialformenden Prozessschritten ist es daher wünschenswert, eine vorgegebene Zieltemperatur möglichst genau einzuhalten und dabei meist auch eine hohe Homogenität der Temperatur über größere Bereiche der vorliegenden Prozessfläche zu erreichen. Diese Homogenität ist dabei jedoch nicht immer erforderlich: Es gibt auch Anwendungen, bei denen eine gezielte Temperatur-Variation zwischen bestimmten Bereichen der Prozessfläche gewünscht ist, z.B. ein Aufheizen eines aufzuschmelzenden Materials in einem bestimmten Teilbereich und ein Abkühlen eines bereits erstarrenden Materials in einem danach durchlaufenen Teilbereich der Prozessfläche.

Nach dem Stand der Technik wird die Temperierung solcher Formungselemente auf eine vorgegebene Zieltemperatur häufig dadurch erreicht, dass das Formungselement thermisch an aktive Heiz- bzw. Kühlelemente angekoppelt ist oder dass solche Heiz- bzw. Kühlelemente in das Formungselement eingebettet sind. Alternativ kommen auch gebohrte Kanäle zum Einsatz, in denen Wärme- oder Kältefluide in der Nähe der Prozessfläche zirkuliert werden, um dort eine gewünschte Zieltemperatur zu erreichen. Allgemein ist es mit solchen lokalen Wärmequellen (bzw. lokalen Wärmesenken) jedoch schwierig, eine homogene Temperaturverteilung über eine größere Prozessfläche hinweg zu erreichen. So ist z.B. typischerweise die lokale Temperatur einer beheizten Prozessfläche umso höher, je näher sich die betreffende Stelle an einem solchen lokalen Heizelement oder an einem solchen lokalen Heizfluid-Kanal befindet. Entsprechend solchen lokalen Temperaturunterschieden finden sich auch an dem gebildeten Produkt unerwünschte Variationen in den Eigenschaften, z.B. unerwünschte Variationen in der Schichtdicke einer gebildeten flächigen Schicht oder lokale Variationen in der chemischen Zusammensetzung oder in der Dichte eines gebildeten Extrusionsprodukts.

Aufgabe der Erfindung ist es daher, ein Formungselement anzugeben, welches die genannten Nachteile überwindet. Insbesondere soll ein Formungselement zur Verfügung gestellt werden, welches eine möglichst präzise Temperierung seiner Prozessfläche entsprechend den Vorgaben des jeweiligen Formungsprozesses erlaubt. Eine weitere Aufgabe besteht darin, ein Fertigungsverfahren zur Verfügung zu stellen, bei dem ein zu verarbeitendes Material mit einem solchen Formungselement geformt wird. Außerdem soll ein Verfahren zur Herstellung eines entsprechenden Formungselements angegeben werden.

Diese Aufgaben werden durch das in Anspruch 1 beschriebene Formungselement, das in Anspruch 14 beschriebene Fertigungsverfahren und das in Anspruch 15 beschriebene Herstellungsverfahren für das Formungselement gelöst.

Das erfindungsgemäße Formungselement ist zur Verwendung in einem Prozess ausgelegt, bei dem ein zu verarbeitendes Material geformt wird. Das Formungselement weist eine Prozessfläche zur Formung des Materials auf sowie einen im Inneren des Formungselements angeordneten Medienraum, in welchem ein fluides Arbeitsmedium nach dem Wirkprinzip eines Wärmerohrs zirkulierbar ist. Dieser Medienraum weist einen Verdampferbereich und einen Kondensatorbereich auf, wobei wenigstens einer dieser beiden Bereiche thermisch so mit der Prozessfläche gekoppelt ist, dass diese durch das zirkulierende Arbeitsmedium temperierbar ist. Der Medienraum ist zur Prozessfläche hin durch ein fluiddichtes erstes Wandelement begrenzt. Der Medienraum weist eine innenliegende Kapillarstruktur mit einer Mehrzahl an kapillar fluidleitenden Kanälen auf.

Der übergeordnete Prozess, bei dem das Material geformt wird, kann beispielsweise ein Fertigungsverfahren und insbesondere ein industrielles Fertigungsverfahren sein. So kann beispielsweise dabei ein Extrusionsprodukt und/oder eine Beschichtung erzeugt werden. Die Vorteile der Erfindung kommen jedoch auch bei anderen Arten von Prozessen zum Einsatz, z.B. bei der Formung eines Gasstroms oder eines Flüssigkeitsstroms für die Zufuhr zu einem Verbrennungsprozess.

Das zu formende Material kann unterschiedliche Aggregatzustände aufweisen: So kann es sich z.B. um einen Feststoff, ein flüssiges Material, ein gasförmiges Material oder um ein Gemisch aus Materialien in verschiedenen Aggregatzuständen handeln. Bei der Materialformung kann es auch zu einem Wechsel des Aggregatszustands kommen. So kann z.B. ein gasförmiges Material durch eine Düse geleitet werden und anschließend kondensieren. Alternativ kann aus einem festen Granulat beim Durchpressen durch eine beheizte Extrusionsdüse eine Schmelze erzeugt werden, welche im weiteren Verlauf wieder zu einem festen Element erstarrt. Auch die chemische Zusammensetzung des Materials kann sich im Verlauf des Formungsschrittes verändern, z.B. durch Abdampfen von Lösungsmitteln oder anderen Hilfsstoffen oder durch den Ablauf einer chemischen Reaktion bei der Formung.

Das Formungselement weist wenigstens eine Prozessfläche auf. Darunter soll eine Fläche des Formungselements verstanden werden, die bei dem Formungsschritt in direktem Kontakt mit dem zu formenden Material steht und ihm somit die ausgebildete Form verleiht. Beispielsweise kann es sich bei der Prozessfläche um die Oberfläche eines innenliegenden Düsenkanals handeln, durch welchen das zu formende Material gepresst wird. Alternativ kann es sich um die Oberfläche einer Walze handeln, mit der das zu formende Material gewalzt wird. Das Formungselement kann auch eine Mehrzahl solcher Prozessflächen aufweisen. Diese können gegebenenfalls zur Formung von mehreren unterschiedlichen Materialien vorgesehen sein, z.B. bei einer Ko-Extrusionsdüse, die zur gleichzeitigen Extrusion separater Materialströme aus separaten Düsenkanälen dient.

Der innenliegende Medienraum ist zur äußeren Umgebung des Formungselements hin abgeschlossen. Mit anderen Worten ist er zumindest fluiddicht für das enthaltene Arbeitsmedium ausgebildet. Im prozessbereiten Zustand ist der Medienraum des Formungselements mit einem Arbeitsmedium befüllt. Das Arbeitsmedium kann in dem abgeschlossenen Medienraum nach dem Wirkprinzip eines Wärmerohrs (englisch: "Heat Pipe") zirkulieren. Mit anderen Worten ist durch den Medienraum eine Verdampfer-Kondensator-Anordnung gebildet, wobei das Arbeitsmedium in einem Verdampferbereich unter Aufnahme von Wärme vom flüssigen in den gasförmigen Aggregatzustand übergehen kann und in einem Kondensatorbereich unter Abgabe von Wärme vom gasförmigen in den flüssigen Aggregatzustand übergehen kann. Entsprechend ist dem Verdampferbereich eine zu entwärmende Begrenzungsfläche des Medienraums zugeordnet, und dem Kondensatorbereich ist eine zu erwärmende Begrenzungsfläche zugeordnet. Je nach Ausgestaltung - also je nachdem, ob die Prozessfläche durch das Arbeitsmedium erwärmt oder gekühlt werden soll - kann entweder die Innenfläche des Verdampferbereichs oder die Innenfläche des Kondensatorbereichs thermisch enger mit der Prozessfläche gekoppelt sein. In jedem Fall wird die thermische Kopplung der Prozessfläche mit dem Arbeitsmedium durch das fluiddichte erste Wandelement vermittelt, welches entsprechend den Medienraum (insbesondere dessen Verdampferbereich oder dessen Kondensatorbereich, je nach Wirkrichtung) zur Prozessfläche hin begrenzt. Entsprechend ist dieses erste Wandelement vorteilhaft vergleichsweise dünn und aus thermisch gut leitfähigem Material ausgebildet, um die thermische Kopplung zu vermitteln und eine Temperierung der Prozessfläche durch den als Wärmerohr wirkenden Medienraum zu ermöglichen.

Allgemein muss der vorliegende Medienraum nicht rohrförmig sein. Auch das Vorliegen einer länglichen Form ist nicht notwendig. Der Begriff "Wärmerohr" wird hier nur verwendet, weil er das Wirkprinzip der kontinuierlichen Wärmeübertragung zwischen einem Kondensorbereich und einem Verdampferbereich unter Nutzung der Verdampfungsenthalpie des zirkulierenden Arbeitsmediums beschreibt, wobei das Arbeitsmedium in einem geschlossenen Kreislauf im Verdampferbereich verdampft und im Kondensorbereich kondensiert. Entsprechend wird verdampftes Arbeitsmedium kontinuierlich vom Verdampferbereich zum Kondensorbereich transportiert. Dieser Transport findet in einem Gasraum statt, welcher durch einen Teilbereich des innenliegenden Medienraums gebildet ist. Dieser Teilbereich wird auch als Dampfkammer (englisch: "Vapor Chamber") bezeichnet. Umgekehrt wird kondensiertes Arbeitsmedium kontinuierlich vom Kondensatorbereich zum Verdampferbereich transportiert. Der Rücktransport wird kapillar unterstützt. Das bedeutet, er erfolgt zumindest zum Teil durch die kapillar fluidleitenden Kanäle der Kapillarstruktur. Vorteilhaft ist diese Kapillarstruktur so ausgestaltet, dass sie zumindest in Teilbereichen des Medienraums eine oder mehrere durchgehende Verbindungen zwischen dem Kondensatorbereich und dem Verdampferbereich bildet.

Ein wesentlicher Vorteil der erfindungsgemäßen Ausgestaltung liegt darin, dass mit Hilfe der innenliegenden Wärmerohr-Anordnung eine präzise Temperierung der für die Materialformung relevanten Prozessfläche erreicht wird. Durch die thermische Ankopplung an den Kondensator- oder Verdampferbereich des Wärmerohr-Systems mittels eines dünnen Wandelements kann auf besonders einfache Weise eine homogene Temperaturverteilung über die Ausdehnung der Prozessfläche erreicht werden. So werden unerwünschte Inhomogenitäten des Formungsprozesses vermieden, welche durch Temperatur-Inhomogenitäten in der Prozessfläche verursacht werden können. Alternativ kann aber auch eine gewünschte Temperaturvariation innerhalb der Prozessfläche durch eine gezielte Variation in der Dicke des koppelnden Wandelements erreicht werden.

Bei dem erfindungsgemäßen Fertigungsverfahren wird ein zu verarbeitendes Material mit einem erfindungsgemäßen Formungselement geformt. Dabei wird insbesondere die Prozessfläche des Formungselements durch ein in dem Medienraum nach dem Wirkprinzip eines Wärmerohrs zirkulierenden Arbeitsmedium temperiert. Die Vorteile des Fertigungsverfahrens ergeben sich analog zu den beschriebenen Vorteilen des erfindungsgemäßen Formungselements. Bei dem Verfahren kann es sich insbesondere um ein Verfahren zum Auftragen oder Nachbehandeln (z.B. Verdichten) einer flächigen Schicht handeln, wobei die Vorteile eines homogen temperierten Formungselements besonders wirksam zum Tragen kommen.

Das erfindungsgemäße Verfahren zur Herstellung des erfindungsgemäßen Formungselements ist ein additives Herstellungsverfahren oder umfasst zumindest einen additiven Verfahrensschritt. Ein solches additives Herstellungsverfahren wird häufig auch als generative Fertigung, auf Englisch als "additive Manufacturing" oder landläufig als "3D-Druck" bezeichnet. Eine additive Herstellung ermöglicht insbesondere eine einfache Erzeugung der innenliegenden Kapillarstruktur auf vergleichsweise engem Raum, wobei auch komplexe Geometrien realisiert werden können. Ein besonderer Vorteil der additiven Fertigung der Kapillarstruktur besteht darin, dass diese auch in einer sehr komplexen Geometrie hergestellt werden kann, das heißt, dass die Ausgestaltung der Verdampfer-Kondensator-Anordnung nicht nur auf eine rohrförmige Geometrie wie im Falle eines üblichen Wärmerohres beschränkt ist. Vielmehr können auch stark davon abweichende Geometrien erzeugt werden, da die Kapillarstruktur geometrisch sehr variabel ausgelegt werden kann und demzufolge auch Verdampfer- und Kondensatorbereiche miteinander koppeln kann, die räumlich unterschiedlich ausgerichtet sind bzw. die verschiedenartig ausgestaltet sind. Weiterhin ist eine monolithische Ausgestaltung der Kapillarstruktur zusammen mit dem ersten Wandelement und gegebenenfalls mit weiteren Elementen möglich, was Vorteile bei der thermischen Anbindung, der mechanischen Festigkeit und/oder der Raumausnutzung mit sich bringen kann.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Formungselements
auch bei dem erfindungsgemäßen Fertigungsverfahren mit dem Formungsschritt bzw. dem erfindungsgemäßen Verfahren zur Herstellung des Formungselements realisiert werden, und umgekehrt.

Gemäß einer vorteilhaften Ausgestaltung der Erfindung kann das Formungselement als Düse und insbesondere als Extrusionsdüse ausgestaltet sein. Bei einer solchen Düse ist die Prozessfläche eine innenliegende Mantelfläche des Formungselements, welche einen Düsenkanal ringförmig umschließt. Durch den Düsenkanal kann das zur formende Material von einem Düseneingang zu einem Düsenausgang entlang einer Flussrichtung gepresst werden. Bei einem Gas oder einer niedrigviskosen Flüssigkeit spricht man in diesem Zusammenhang auch von einer Strömung des Materials. Der Querschnitt des Düsenkanals kann sich dabei entlang der Flussrichtung verändern und insbesondere zum Düsenausgang hin verengen. Auch der Querschnitt des den Kanal umschließenden Formungselements kann sich in Form und/oder Größe der Querschnittsfläche entlang der Flussrichtung verändern. Vorteilhaft kann durch die erfindungsgemäße Ausgestaltung zumindest in Teilbereichen der innenliegenden Prozessfläche eine im Wesentlichen homogene Temperaturverteilung erreicht werden. So kann insbesondere für eine gegebene Position entlang der Flussrichtung eine insgesamt homogene Temperaturverteilung in Umfangsrichtung erreicht werden. Alternativ oder zusätzlich kann auch entlang der Flussrichtung eine im Wesentlichen homogene Temperatur der Prozessfläche erreicht werden. Alternativ hierzu kann aber auch eine gewünschte Variation der Prozessflächen-Temperatur entlang der Flussrichtung erreicht werden. Eine Temperatur-Variation kann prinzipiell graduell oder auch in Stufen erfolgen. Häufig ist zumindest bei Extrusionsdüsen ein Beheizen der Prozessfläche im Vergleich zur äußeren Umgebung erwünscht, um das zu formende Material für eine bessere Fließfähigkeit temporär zu erwärmen. Bei dieser Variante ist dann zweckmäßig der Kondensatorbereich des Medienraums thermisch so an die Prozessfläche gekoppelt, dass die Prozessfläche durch das zirkulierende Arbeitsmedium erwärmbar ist. Alternativ oder zusätzlich kann aber auch ein Medienraum zur Kühlung der Prozessfläche vorliegen, wobei diese Kühlung gegebenenfalls lokal (also z.B. nur in einem Teilbereich entlang der Flussrichtung) erfolgen kann. Allgemein können entlang der Flussrichtung mehrerer Medienräume in Serie angeordnet sein, welche fluidisch nicht miteinander verbunden sind. So können besonders einfach unterschiedliche Temperaturen für verschiedene Abschnitte des Düsenkanals eingestellt werden.

Allgemein kann eine Extrusionsdüse nicht nur einen innenliegenden Düsenkanal, sondern auch mehrere innenliegende Düsenkanäle mit jeweils zugeordneten mantelförmigen Prozessflächen aufweisen. Dabei kann es sich beispielsweise um eine sogenannte Ko-Extrusionsdüse handeln. Mit einer solchen mehrkanaligen Düse können gegebenenfalls auch mehrere unterschiedliche Materialien gleichzeitig extrudiert werden, wodurch komplexe Extrusionsprodukte gefertigt werden können. Dazu kann die Führung der einzelnen Kanäle ebenfalls eine hohe geometrische Komplexität aufweisen. So können sich die einzelnen Kanäle z.B. entlang der Flussrichtung verzweigen und/oder mehrere Kanäle können sich entlang der Flussrichtung zu einem Kanal vereinigen. Die Fertigung solcher komplexer Formungselemente wird allgemein durch additive Fertigungsverfahren erleichtert. Bei der erfindungsgemäßen Ausgestaltung ist wenigstens einem dieser Kanäle ein abgeschlossener Medienraum mit einem entsprechenden Wärmerohr-System zugeordnet. Vorteilhaft können aber auch mehrere Kanäle mit entsprechend zugeordneten Medienräumen vorliegen. Die genaue geometrische Auslegung der Kanäle und insbesondere auch die Auslegung der zugehörigen Medienräume kann besonders vorteilhaft durch eine automatisierte, computergestützte Erzeugung eines an die Design-Vorgaben angepassten CAD-Datensatzes erfolgen.

Gemäß einer alternativen Ausgestaltung der Erfindung kann das Formungselement als Walze und insbesondere als Kalanderwalze ausgestaltet sein. Dabei können auch mehrere solche Formungselemente in einem übergeordneten Walzensystem zusammenwirken. Die einzelnen Walzen sind dabei jeweils um eine Achse drehbar gelagert (z.B. mittels einer Welle), und das zu formende Material kann durch einen Schlitz gepresst werden, welcher zwischen benachbarten Walzen ausgebildet ist. Zur Verwirklichung des erfindungsgemäßen Gedankens ist es ausreichend, wenn zumindest eine der Walzen eines solchen Systems auf die beschriebene Weise mit einem innenliegenden Medienraum zur Temperierung der Prozessfläche ausgestaltet ist, es können aber auch mehrere sein. Die Prozessfläche ist bei einer solchen Walze eine (bezogen auf ihre Drehachse) radial außenliegende Mantelfläche. Entsprechend liegt der wenigstens eine Medienraum radial innerhalb der Prozessfläche. Dabei kann es sich insbesondere um einen ringförmigen Medienraum handeln, welcher sich über den gesamten Umfang erstreckt. Alternativ kann der Umfang in einzelne Segmente unterteilt sein, wobei wenigstens ein Segment (und insbesondere eine Mehrzahl davon) jeweils einen Medienraum zur Temperierung des zugehörigen Prozessflächen-Abschnitts aufweist.

Gemäß einer allgemein vorteilhaften Ausführungsform der Kapillarstruktur kann diese monolithisch mit dem ersten Wandelement verbunden sein. Unter dem Begriff "monolithisch verbunden" bzw. "monolithisch ausgebildet" wird dabei allgemein verstanden, dass das beschriebene Bauteil einstückig ist, also aus einem Stück besteht. Besonders vorteilhaft werden die monolithisch miteinander ausgebildeten Teilelemente gemeinsam in einem additiven Fertigungsverfahren gebildet. Alle genannten Bauteilbestandteile sind ohne Fügeverbindungen vorgefertigter Bauteile ausschließlich durch Materialübergänge, die beispielsweise durch Schmelzvorgänge oder diffusionsgesteuerte Sintervorgänge entstanden sind, miteinander verbunden. Monolithische Bauteile bestehen in der Regel aus einem einheitlichen Material, beispielsweise aus einer bestimmten metallischen Legierung. Je nach additivem Herstellungsverfahren ist es jedoch auch möglich, monolithische Bauteile selektiv mit veränderten Materialzusammensetzungen zu erzeugen.

Allgemein besonders vorteilhaft können die Kapillarstruktur und das erste Wandelement (sowie gegebenenfalls auch weitere vorhandene Begrenzungswände und Füllelemente des Medienraums) aus einem metallischen Material gebildet sein. Insbesondere sind alle diese metallischen Elemente vorteilhaft miteinander monolithisch gebildet. Durch ein metallisches Material wird allgemein eine hohe mechanische Festigkeit in Kombination mit einer guten thermischen Leitfähigkeit erreicht.

Weiterhin ist es allgemein vorteilhaft, wenn zumindest die Kapillarstruktur und das erste Wandelement mit einem additiven Herstellungsverfahren gebildet sind. Auch weitere optionale Elemente wie beispielsweise ein zweites Wandelement und/oder eine optionale Stützstruktur können ebenfalls mit diesem additiven Herstellungsverfahren gebildet sein. Allgemein kann es sich bei dem additiven Herstellungsverfahren um ein pulverbettbasiertes Verfahren handeln. Hiermit sind auf einfache Weise auch komplexe metallische Strukturen herstellbar. Geeignete Verfahren sind beispielsweise selektives Laserschmelzen (SLM) bzw. Laser Powder Bed Fusion (LPBF), selektives Lasersintern (SLS), Metal Binder Jetting, Mold Jetting oder Electron Beam Melting (EBM). In einer anderen Ausgestaltungsform ist das additive Verfahren ein pastenbasiertes Sintermetallverfahren.

Gemäß einer vorteilhaften Ausgestaltung der Erfindung kann das Formungselement eine mit dem ersten Wandelement monolithisch in Verbindung stehende Stützstruktur und insbesondere ein Stützgitter aufweisen. Diese Stützstruktur ist dazu ausgelegt, das erste Wandelement gegen ein oder mehrere andere Teilelemente des Formungselements mechanisch abzustützen.

Dies kann insbesondere eine Rückwand sein, also ein zweites Wandelement, welches den Medienraum zu einer dem ersten Wandelement gegenüberliegenden Seite hin begrenzt. Es kommen aber auch andere rückseitige Elemente zur Abstützung des ersten Wandelements mit Hilfe der Stützstruktur in Frage, z.B. eine radial innenliegende Welle einer Kalanderwalze. Bei Vorhandensein einer solchen Stützstruktur kann vorteilhaft das erste Wandelement dünner und somit mechanisch weniger fest ausgeführt werden, als es im Hinblick auf die im Prozess anfallende Druckbelastung der Prozessfläche ohne eine solche Stützstruktur möglich wäre. Mit anderen Worten wird das erste Wandelement gegen die auf der Prozessfläche auftretenden Belastungen durch die rückseitige Stützstruktur mechanisch stabilisiert. Bei der beschriebenen monolithischen Anbindung der Stützstruktur an das erste Wandelement ist diese Abstützung besonders wirksam, wobei gleichzeitig der benötigte Materialaufwand zur Ausbildung des Stützgitters vorteilhaft gering ist. Besonders bevorzugt werden das erste Wandelement, die Kapillarstruktur und diese Stützstruktur gemeinsam in einem additiven Fertigungsverfahren hergestellt, insbesondere aus einem metallischen Material. Dieses metallische Material kann über die genannten Strukturen im Wesentlichen einheitlich zusammengesetzt sein. Es ist aber auch möglich, dass z.B. die Zusammensetzung einer metallischen Legierung über die monolithische Struktur hinweg eine Variation aufweist, um den unterschiedlichen mechanischen und/oder thermischen Anforderungen an die einzelnen Elemente Rechnung zu tragen. Auch die Kornstruktur kann durch lokale Anpassung der Fertigungsparameter in einzelnen Abschnitten unterschiedlich ausgestaltet sein, um z.B. innerhalb der Kapillarstruktur eine höhere Porosität zu erreichen als in den übrigen Elementen.

Bei der Ausgestaltung der Stützstruktur als Stützgitter wird vorteilhaft eine besonders effektive und gleichmäßige rückseitige Abstützung erreicht. Das Stützgitter kann insbesondere eine regelmäßige Gitterstruktur ausbilden, mit anderen Worten kann das Stützgitter aus einer regelmäßigen Anordnung von untereinander im Wesentlichen gleichen Gitterzellen mit gleicher Geometrie, Größe und räumlicher Ausrichtung aufgebaut sein. Alternativ kann sich die Gitterstruktur aber auch von einem solchen regelmäßigen Gitter ableiten, aber an die lokale Form des ersten Wandelements angepasst sein. So kann z.B. die lokale Ausrichtung in einem kartesischen Koordinatensystem variieren, um eine für die Materialformung benötigte Wölbung des ersten Wandfläche nachzubilden.

Allgemein und unabhängig davon, ob ein solches Stützgitter regelmäßig ist oder lokale Variationen aufweist, kann es vorteilhaft aus einer Mehrzahl von massiven Gitterstäben zusammengesetzt sein. Gemäß einer alternativen Ausgestaltung können solche Gitterstäbe auch hohl ausgestaltet sein bzw. es kann eine Kombination aus hohlen und massiven Stäben vorliegen. Die einzelnen Stäbe können dabei jeweils gerade ausgebildet sein. Alternativ oder zusätzlich können aber auch insbesondere gebogene Gitterstäbe vorliegen. Optional können die einzelnen Gitterstäbe im Bereich von Knotenpunkten des Gitters monolithisch miteinander verbunden sein. In den Bereichen des Medienraums, in denen die Kapillarstruktur angeordnet ist, kann eine solche Stützstruktur (und insbesondere die Gitterstäbe eines Stützgitters) die Kapillarstruktur lokal durchdringen. Dies kann zweckmäßig sein, um die Stützstruktur durch die Kapillarstruktur hindurch monolithisch an das erste Wandelement anzubinden.

Allgemein ist im Bereich der Verbindung des ersten Wandelements mit der Stützstruktur die thermische Kopplung der Prozessfläche mit dem Arbeitsmedium leicht verändert. Bei einer ausreichend feinen Ausgestaltung der einzelnen Stützelemente (insbesondere der Gitterstäbe) ist diese Änderung der thermischen Ankopplung jedoch vergleichsweise gering, so dass trotzdem eine ausreichend homogene Temperierung der Prozessfläche erreicht werden kann. Hierzu ist vorzugsweise die lokale Querschnittsfläche der einzelnen Stützelemente im Bereich der Anbindung an das erste Wandelement nicht größer als 4 mm².

Alternativ zu der vorab beschriebenen Ausgestaltung mit einer zusätzlichen Stützstruktur kann jedoch auch bereits durch die monolithisch mit dem ersten Wandelement verbundene Kapillarstruktur eine ausreichende mechanische Abstützung des ersten Wandelements gegen Druckkräfte von der Seite der Prozessfläche erreicht werden. In einem solchen Fall ist das Vorhandensein einer zusätzlichen Stützstruktur nicht notwendig. Je nach den bei dem Formungsprozess auftretenden Druckkräften und je nach Wandstärke des ersten Wandelements kann es auch sein, dass das erste Wandelement bereits in sich mechanisch fest genug ist und dass keinerlei zusätzliche rückseitige Abstützung benötigt wird.

Allgemein vorteilhaft kann die Kapillarstruktur eine Porosität zwischen 5% und 70% aufweisen. Mit anderen Worten kann der Füllgrad des Materials im Bereich der Kapillarstruktur zwischen 30% und 95% liegen, wobei die verbleibenden Hohlräume vorteilhaft untereinander verbunden sind. Es wird dann von einer offenen Porosität gesprochen. Eine Porosität im genannten Bereich ist günstig, um das kondensierte Arbeitsfluid durch die Poren der Kapillarstruktur effektiv vom Kondensatorbereich zum Verdampferbereich zurückzuführen. Außerdem kann durch die Oberflächenvergrößerung im Bereich der Poren eine Verdampfung des Arbeitsmediums gefördert werden. Weiterhin ist es für den kapillaren Transport des Kondensats vorteilhaft, wenn die fluidleitenden Kanäle einen mittleren Kanaldurchmesser zwischen 10 µm und 1000 um, insbesondere zwischen 30 µm und 500 µm, aufweisen.

Allgemein vorteilhaft können die fluidleitenden Kanäle dadurch ausgebildet sein, dass die Kapillarstruktur im Rahmen eines additiven Fertigungsverfahrens als offenporiger metallischer Schaum ausgebildet wird. Unter dem Begriff "offenporiger metallischer Schaum" wird dabei ein Gebilde verstanden, das ein hohes Verhältnis von Oberfläche zu Volumen hat und dabei eine offene Porosität aufweist. Der Begriff Schaum wird dabei jedoch nicht in dem Zusammenhang gesehen, wie er beim gasförmigen Aufschäumen einer Substanz verwendet wird. Vielmehr werden darunter alle offenporigen Gebilde verstanden, die in diesem Fall insbesondere monolithisch zusammen mit dem ersten Wandelement in einem additiven Fertigungsverfahren ausgebildet werden können. So kann zum Beispiel bei Anwendung eines pulverbettbasierten Verfahrens durch die Korngröße und Kornform des eingesetzten Pulvers sowie durch die weiteren Prozessparameter (z.B. der lokale Wärmeeintrag beim Sintern oder Schmelzen) die offene Porosität gezielt beeinflusst werden.

Alternativ oder zusätzlich zu der beschriebenen Ausgestaltung als metallischer Schaum können die fluidleitenden Kanäle aber auch durch definierte Kanalelemente gebildet sein. Unter einem "definierten Kanalelement" soll dabei ein geometrisches Element verstanden werden, welches sich nicht zufällig im Rahmen des Herstellungsprozesses an einer bestimmten Stelle ausbildet, sondern welches im Rahmen des geometrischen Designs definiert wurde, welches also z.B. als Element im CAD-Design angeben wurde. Hier sind zum Beispiel rippenförmige Elemente denkbar, die sich innerhalb des Medienraums and das erste Wandelement anschließen, und die zwischen den einzelnen Rippen definierte längliche Kanäle mit einer geeigneten Größe für den kapillaren Transport des Kondensats ausbilden, wie oben beschrieben.

Gemäß einer allgemein vorteilhaften Ausgestaltung kann das erste Wandelement eine Wandstärke zwischen 0,1 mm und 4 mm aufweisen. Besonders bevorzugt liegt diese Wandstärke zwischen 0,5 mm und 2 mm. Eine Dicke in einem solchen Bereich ist vorteilhaft, um einerseits eine gute thermische Ankopplung der Prozessfläche an das Arbeitsmedium zu erreichen und andererseits die Wand stabil genug für den Formungsprozess auszugestalten. Vor allem bei höheren Druckkräften währen des jeweiligen Formungsprozesses kann dabei das Vorhandensein einer zusätzlichen Stützstruktur und/oder die mechanische Abstützung mittels der innenliegenden Kapillarstruktur zweckmäßig sein. Mit anderen Worten kann die Dicke des ersten Wandelements so gewählt sein, dass sie ohne das Vorliegen einer solchen zusätzlichen mechanischen Abstützung den im Prozess auftretenden Druckkräften nicht standhalten würde.

Vorteilhaft kann der innenliegende Medienraum außerdem durch ein zweites fluiddichtes Wandelement begrenzt sein, welches dem ersten Wandelement gegenüberliegt. Dieses zweite Wandelement kann insbesondere mit einer höheren Wandstärke ausgestaltet sein, und das erste Wandelement kann durch eine Stützstruktur (und/oder durch die innenliegende Kapillarstruktur) gegen das zweite Wandelement mechanisch abgestützt sein. Bei einer solchen Ausgestaltung kann vorteilhaft eine besonders geringe Wandstärke des ersten Wandelements zum Einsatz kommen, da die benötigte Druckfestigkeit vor allem durch die rückseitige Abstützung gegen das dickere zweite Wandelement erreicht wird. So kann die Wandstärke des zweiten Wandelements vorteilhaft ein einem Bereich zwischen 3 mm und 15 mm und besonders bevorzugt in einem Bereich zwischen 4 mm und 10 mm liegen. Die innenliegende Stützstruktur kann sich also vom ersten Wandelement zum zweiten Wandelement erstrecken und insbesondere monolithisch mit diesen beiden Wandelementen ausgestaltet sein. Bei einer Ausgestaltung des Formungselements als Düse kann beispielsweise das erste Wandelement den innenliegenden Düsenkanal mantelartig umschließen, und das zweite Wandelement kann wiederum das erste Wandelement mantelartig umschließen. Mit anderen Worten ist dann die dünnere Innenwand des Medienraums gegen eine dickere Außenwand mechanisch abgestützt. Bei einer Ausgestaltung des Formungselements als Walze sind dagegen die Verhältnisse genau anders herum: Hier bildet das erste Wandelement eine radial außenliegende Wand, und das dickere zweite Wandelement ist eine radial innenliegende Wand. Alternativ zu einem radial innenliegenden zweiten Wandelement kann jedoch auch eine analoge mechanische Abstützung zu einem anderen radial innenliegenden Element erfolgen, z.B. zu einer massiven Welle der Walze.

Gemäß einer ersten vorteilhaften Variante für die Ausgestaltung des ersten Wandelements kann dieses eine über den Verlauf der Prozessfläche einheitliche Wandstärke aufweisen.

Dies ist vor allem dann zweckmäßig, wenn bei dem Formungsprozess eine einheitliche Temperierung der Prozessfläche erwünscht ist. Bei einheitlicher Wandstärke und einheitlichem Material wird eine homogene Anbindung an das Arbeitsfluid des Medienraums erreicht und somit eine annähernd homogene Temperaturverteilung. Eine möglichst homogene Temperierung der Prozessfläche ist vor allem bei der Formung von homogenen flächigen Schichten, beispielsweise mittels Schlitzdüsen oder Kalanderwalzen, wünschenswert.

Gemäß einer alternativen Ausführungsvariante kann das erste Wandelement eine über den Verlauf der Prozessfläche variierende Wandstärke aufweisen. Dieser Verlauf kann wiederum an ein erwünschtes variierendes Temperaturprofil angepasst sein. So kann zum Beispiel - wenn das in dem Medienraum wirkende Wärmerohrsystem insgesamt zur Erwärmung der Prozessfläche ausgelegt ist - durch eine lokal dünnere Wandstärke eine höhere Oberflächentemperatur und durch eine lokal dickere Wandstärke eine lokal niedrigere Oberflächentemperatur erreicht werden. Bei einer Auslegung des Wärmerohrsystems zur Kühlung der Prozessfläche sind die Verhältnisse entsprechend umgekehrt.

So sind allgemein bezüglich der Wirkrichtung des Wärmerohr-Systems verschiedene Ausgestaltungen möglich. Gemäß einer ersten Ausgestaltungsvariante kann der Kondensatorbereich des Medienraums im Bereich des ersten Wandelements angeordnet sein. Entsprechend ist der Verdampferbereich in einem hiervon beabstandeten Bereich angeordnet, beispielsweise im Bereich eines rückseitigen zweiten Wandelements. Insgesamt ist bei dieser Ausgestaltungsvariante das Wärmerohrsystem zum Beheizen des ersten Wandelements ausgelegt. Um eine effektive Erwärmung zu erreichen, kann der Verdampferbereich thermisch an wenigstens ein zusätzliches Heizelement angekoppelt sein. Beispielsweise können ein oder mehrere aktive Heizelemente im Bereich des zweiten Wandelements angeordnet sein. Besonders vorteilhaft ist es, wenn dieses wenigstens eine Heizelement geodätisch unterhalb des ersten Wandelements liegt, da so der Rücktransport des kondensierten Arbeitsmediums vom Kondensatorbereich zum Verdampferbereich durch die Schwerkraft unterstützt wird. Die tieferliegende Anordnung des Heizelements ist jedoch nicht zwingend, da der kapillare Rücktransport des Arbeitsmediums auch entgegen der Schwerkraft funktioniert.

Gemäß einer alternativen, zweiten Ausgestaltungsvariante kann der Verdampferbereich des Medienraums im Bereich des ersten Wandelements angeordnet sein. Entsprechend ist der Kondensatorbereich in einem hiervon beabstandeten Bereich angeordnet, beispielsweise im Bereich eines rückseitigen zweiten Wandelements. Insgesamt ist bei dieser Ausgestaltungsvariante das Wärmerohrsystem zum Entwärmen des ersten Wandelements ausgelegt. Um eine effektive Kühlung zu erreichen, kann der Kondensatorbereich thermisch an wenigstens ein zusätzliches Kühlelement angekoppelt sein. Beispielsweise können ein oder mehrere aktive Kühlelemente im Bereich des zweiten Wandelements angeordnet sein. Besonders vorteilhaft ist es, wenn das wenigstens eine Kühlelement geodätisch oberhalb des ersten Wandelements liegt, da so der Rücktransport des kondensierten Arbeitsmediums vom Kondensatorbereich zum Verdampferbereich durch die Schwerkraft unterstützt wird. Auch hier ist die tiefere Anordnung des Kühlelements jedoch nicht zwingend.

Gemäß einer alternativen, dritten Ausgestaltungsvariante kann das Wärmerohrsystem so ausgelegt sein, dass seine Wirkrichtung flexibel umkehrbar ist. Mit anderen Worten kann dann die Umgebung des ersten Wandelements entweder als Kondensatorbereich oder als Verdampferbereich wirken, je nachdem ob gerade eine Erwärmung oder eine Kühlung der Prozessfläche im Verhältnis zur äußeren Umgebungstemperatur erforderlich ist. Um eine solche dynamische Änderung der Wirkrichtung zu ermöglichen, kann die Ankopplung der Kapillarstruktur an die jeweiligen Bereiche (das erste Wandelement einerseits und einer davon beabstandeter Bereich des Medienraums andererseits) im Wesentlichen symmetrisch ausgestaltet sein.

Allgemein ist es für die Ausbildung eines Kondensatorbereichs vorteilhaft, wenn zumindest ein Teilbereich der zu entwärmenden Fläche frei ist. Damit ist gemeint, dass diese Flächenanteile frei von der beschriebenen Kapillarstruktur sind und dass hier insbesondere eine glatte metallische Oberfläche zur Verfügung steht, an der das Arbeitsmedium kondensieren kann. Der freie Flächenanteil kann im Kondensatorbereich vorteilhaft zwischen 50% und 90% liegen. Auch die freien Flächenbereiche weisen aber vorteilhaft einen geringen Abstand zur nächsten Kapillarstruktur auf, um einen effizienten Abtransport des kondensierten Arbeitsmediums zurück zum Verdampferbereich zu ermöglichen.

Demgegenüber ist es für die Ausbildung eines Verdampferbereichs allgemein vorteilhaft, wenn zumindest ein Teilbereich der zu erwärmenden Fläche mit der Kapillarstruktur und/oder einer anderen Struktur mit einer wirksamen Oberflächenvergrößerung belegt ist. Dies kann insbesondere der oben beschriebene metallische Schaum sein. Die Belegung mit einer solchen Struktur trägt dazu bei, dass einerseits ein ausreichend hoher kapillarer Transport von kondensiertem Arbeitsmedium in den Verdampferbereich stattfindet und dass andererseits eine ausreichend hohe Oberfläche für die Verdampfung zur Verfügung steht. Der mit einer entsprechenden oberflächenvergrößernden Struktur belegte Flächenanteil kann im Verdampferbereich vorteilhaft zwischen 60% und 95% liegen. Demgegenüber liegt der belegte Flächenanteil vorteilhaft zwischen 25% und 75%, wenn die jeweilige Oberfläche dynamisch entweder als Kondensatorbereich oder als Verdampferbereich zum Einsatz kommen soll.

Gemäß einer allgemein vorteilhaften Ausführungsform kann der Medienraum von einem zusätzlichen Vakuummantel umgeben sein. Diese Ausführung ist vor allem dann besonders vorteilhaft, wenn die Prozessfläche wie bei einer Düse innerhalb des Formungselements verläuft und entsprechend auf der Außenseite eine zusätzliche thermische Isolation gegen die äußere Umgebung erwünscht ist. Hier kann sich dann gegebenenfalls an ein vergleichsweise dickes, außenliegendes, zweites Wandelement ein solcher zusätzlicher Vakuummantel anschließen. Auf diese Weise wird der Wärmefluss zwischen dem Arbeitsmedium und der äußeren Umgebung verringert und die Temperierung der Prozessfläche durch das Wärmerohr-System wird noch effizienter.

Allgemein kann die chemische Zusammensetzung des Arbeitsmediums aus einer großen Vielfalt von geeigneten Stoffen gewählt werden, abhängig von der jeweiligen Zieltemperatur der Prozessfläche. So kann das Arbeitsmedium für einen Temperaturbereich des Medienraums zwischen 10 °C und 50°C einen oder mehrere der folgenden Stoffe umfassen: Wasser, Aceton, Kohlenstoffdioxid, Ammoniak, Methanol, Methylamin, Pentan, Propylen, Ethan, organische, bevorzugt aliphatische Carbonsäureester, fluorierte Kohlenwasserstoffe, Fluorchlorkohlenwasserstoffe und andere übliche Kältemittel. Für einen mittleren Temperaturbereich zwischen 50 °C und 150 °C kann das Arbeitsmedium vorteilhaft einen oder mehrere der folgenden Stoffe umfassen: Aceton, Wasser, Methanol, Toluol, Ammoniak, organische, bevorzugt höhere aliphiatische Carbonsäureester, fluorierte Kohlenwasserstoffe, Fluorchlorkohlenwasserstoffe und andere übliche Kältemittel. Für einen hohen Temperaturbereich zwischen 150 °C und 350 °C kann das Arbeitsmedium vorteilhaft einen oder mehrere der folgenden Stoffe umfassen: Naphthalin, Wasser, Toluol sowie weitere übliche Hochtemperaturkühlmittel mit einem hohen Dampfdruck wie beispielsweise langkettige aliphatische oder aromatische Ether und Ketone. Je nach (aktueller) Wirkrichtung des Wärmerohr-Systems kann das Arbeitsmedium dabei prinzipiell entweder als Kühlmittel oder als Heizmittel für die zu temperierende Prozessfläche wirken.

Nachfolgend wird die Erfindung anhand einiger bevorzugter Ausführungsbeispiele unter Bezugnahme auf die angehängten Zeichnungen beschrieben, in denen:
- Figur 1: eine schematische perspektivische Darstellung eines Formungselements nach einem ersten Beispiel der Erfindung zeigt,
- Figur 2: eine schematische Schnittdarstellung des Formungselements der Figur 1 zeigt,
- Figur 3: eine detailliertere Darstellung des Formungselements mit einem Stützgitter zeigt,
- Figur 4: ein Formungselement nach einem zweiten Beispiel der Erfindung zeigt,
- Figur 5: eine Variante des Formungselements der Figur 4 zeigt und
- Figur 6: ein Formungselement nach einem dritten Beispiel der Erfindung zeigt.

In den Figuren sind gleiche oder funktionsgleiche Elemente mit gleichen Bezugszeichen versehen.

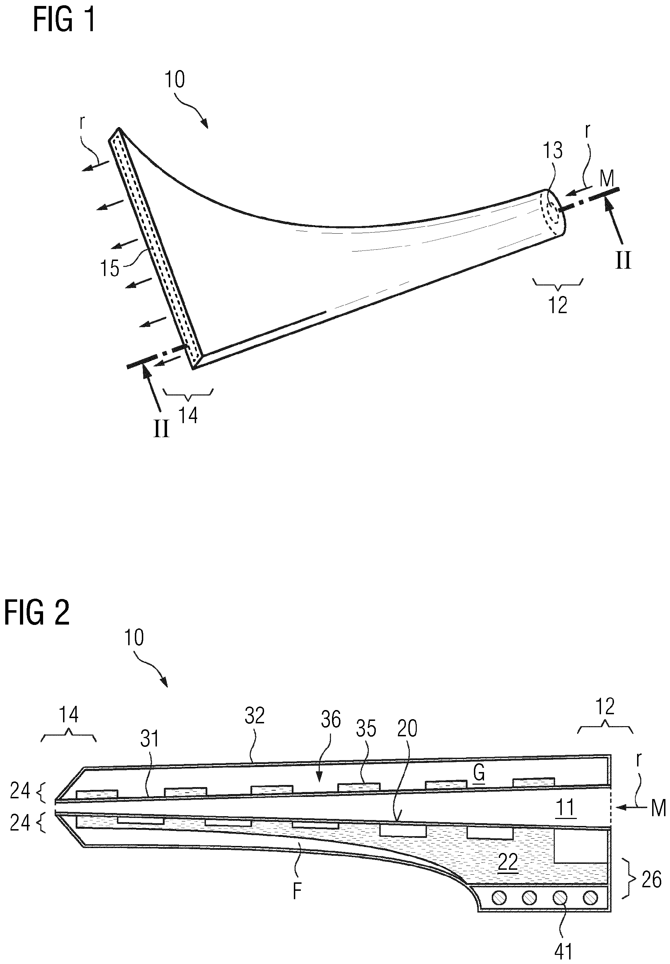

In Figur 1 ist eine schematische perspektivische Darstellung eines Formungselements 10 nach einem ersten Beispiel der Erfindung gezeigt. Dieses Formungselement 10 ist hier als Extrusionsdüse ausgestaltet, mit welcher ein zu formendes Material M mittels Hindurchpressens durch einen innenliegenden Düsenkanal 11 extrudiert werden kann. Dabei wird das Material M entlang der Transportrichtung r durch den Düsenkanal 11 gepresst. Bei diesem Beispiel liegt im Eingangsbereich 12 der Extrusionsdüse 10 ein annähernd kreisförmiger Kanaleinlass 13 vor, und im Austrittsbereich 14 liegt ein Kanalauslass 15 mit einer länglichen rechteckigen Querschnittsform vor. Es handelt sich mit anderen Worten um einen schlitzförmigen Kanalauslass, weshalb diese Extrusionsdüse 10 auch als Schlitzdüse bezeichnet werden kann. Sie eignet sich daher besonders zur Formung von folienartigen Extrusionsprodukten und/oder zur Auftragung von annähernd homogenen Beschichtungen auf flächigen Substraten. Die genaue Formgebung des innenliegenden Teils des Düsenkanals 11 ist hier der Übersichtlichkeit halber nicht gezeigt. Vorteilhaft kann die Geometrie einer solchen Extrusionsdüse mittels einer computergestützten rheologischen Optimierung erhalten werden, z.B. als automatisiert erzeugte CAD-Datei. Alternativ zu dem hier gezeigten einfachen Kanal können in ähnlicher Weise auch Ko-Extrusionsdüsen mit mehreren Kanälen zum Einsatz kommen und durch rheologische Simulationen optimiert werden. Abhängig von der gewünschten Prozessführung - also z.B. abhängig von der Art des Materials M, dem bei der Formung verwendeten Druck und den gewünschten Eigenschaften des erhaltenen Produkts - kann es erforderlich sein, das Material M im innenliegenden Düsenkanal 11 zu heizen und/oder zu kühlen. Mit anderen Worten kann eine Temperierung der innenliegenden Prozessfläche erforderlich sein. So soll beim gezeigten Beispiel insbesondere eine Beheizung des innenliegenden Düsenkanals ermöglicht werden.

Figur 2 zeigt die Extrusionsdüse 10 in einem schematischen Längsschnitt, welcher den innenliegenden Düsenkanal 11 genauer zeigt, gemäß Schnittebene II der Figur 1. In diesem Längsschnitt ist gut zu erkennen, wie sich der innenliegende Düsenkanal 11 vom Eingangsbereich 12 zum Austrittsbereich 14 hin verjüngt. In der hier nicht gezeigten, senkrecht zur Abbildung liegenden Ebene weitet sich der Querschnitt dagegen auf, um die in Figur 1 dargestellte Schlitzform im Austrittsbereich 14 zu erreichen. Dies kann insbesondere bei annähernd gleichbleibender Querschnittsfläche des Düsenkanals 11 erfolgen. Beim Hindurchpressen durch den Düsenkanal 11 wird das Material M mittels der innenliegenden Prozessfläche 20 geformt. Diese Prozessfläche 20 umgibt den innenliegenden Düsenkanal also mantelförmig.

Um die Temperierung und hier insbesondere die Beheizung der Prozessfläche 20 zu ermöglichen, weist die Extrusionsdüse 10 in ihrem Inneren einen fluiddicht abgeschlossenen Medienraum 22 auf. Beim gezeigten Beispiel handelt es sich bei dem Medienraum 22 um eine ringförmige Kammer, welche den innenliegenden Düsenkanal 11 auf seiner ganzen Länge umschließt. Nach innen, also zum Düsenkanal 11 hin, ist dieser Medienraum durch ein erstes Wandelement 31 begrenzt, welches vergleichsweise dünn ausgeführt ist, um eine gute thermische Ankopplung eines im Medienraum 22 eingeschlossenen fluiden Arbeitsmediums F an die Prozessfläche 20 zu bewirken. Das fluide Arbeitsmedium F zirkuliert im Inneren des Medienraums 22 nach dem Wirkprinzip eines Wärmerohr. Dabei muss der Medienraum 22 nicht unbedingt rohrförmig sein. Wesentlich ist nur, dass er einen Verdampferbereich und einen Kondensatorbereich aufweist, so dass das Arbeitsmedium F einen Wärmetransport zwischen diesen beiden Bereichen durch abwechselnde Übergänge zwischen der flüssigen Phase und der Dampfphase bewirken kann. Beim gezeigten Beispiel ist der Medienraum 22 zum Beheizen des ersten Wandelements 31 ausgelegt. Entsprechend ist der Kondensatorbereich 24 hier im Bereich des ersten Wandelements 31 angeordnet und umschließt dieses insbesondere ringförmig. Der Verdampferbereich 26 ist dagegen in einem Teilabschnitt eines außenliegenden zweiten Wandelements 32 angeordnet, welches den ringförmigen Medienraum 22 zur äußeren Umgebung hin begrenzt. Das zweite Wandelement 32 kann dabei eine höhere Wandstärke aufweisen als das innenliegende erste Wandelement 31.

Im Verdampferbereich 26 verdampft das fluide Arbeitsmedium, wobei von seiner Umgebung Wärme aufgenommen wird. Diese Wärme wird hier insbesondere von einer Mehrzahl von aktiven Heizelementen 41 erzeugt, welche in einen untenliegenden Bereich des zweiten Wandelements 32 eingebettet sind. Das verdampfte Arbeitsmedium F gelangt durch die freien Bereiche des Medienraums 22 - also den Gasraum G - in den Kondensatorbereich 24, wo es auf der vergleichsweise kühlen Oberfläche des ersten Wandelements 31 kondensiert. Das Arbeitsmedium F wirkt hier also als Heizmittel, wobei es das erste Wandelement 31 durch seine Kondensationswärme erwärmt. Bei einheitlicher Wandstärke des ersten Wandelements 31 erfolgt eine im Wesentlichen homogene thermische Ankopplung an den einheitlich temperierten Gasraum G, so dass auch die innenliegende Prozessfläche 20 im Wesentlichen homogen temperiert wird. Insbesondere kann über die gesamte Breite des Düsenschlitzes im Ausgangsbereich 14 (also in der hier nicht dargestellten Raumrichtung) eine einheitliche Düsentemperatur eingestellt werden. Dagegen kann bei Bedarf z.B. entlang der Transportrichtung r ein Temperaturgradient eingestellt werden, indem die Dicke des ersten Wandelements 31 entsprechend variiert wird, um lokal die thermische Ankopplung an den Gasraum zu verändern.

Allgemein und unabhängig von der geometrischen Ausgestaltung der Wände erfolgt jedenfalls eine Kondensation im Bereich des ersten Wandelements 31 und eine Verdampfung in einem Teilbereich des zweiten Wandelements 32. Um eine kontinuierliche Zirkulation des Arbeitsmediums F aufrechtzuerhalten, wird das flüssige Kondensat durch eine Kapillarstruktur 35 vom Kondensatorbereich 24 zum Verdampferbereich 26 zurücktransportiert. Diese Kapillarstruktur 25 kann in einem additiven Fertigungsverfahren monolithisch zusammen mit dem ersten Wandelement 31 und insbesondere auch zusammen mit dem zweiten Wandelement 32 hergestellt sein. Es kann sich insgesamt um eine metallische Struktur handeln, welche z.B. in einem pulverbettbasierten Verfahren hergestellt worden ist. Über eine Kornstruktur des verwendeten Metallpulvers und weitere relevante Prozessparameter kann eine offene Porosität der Kapillarstruktur 35 eingestellt werden, welche durch den Herstellungsprozess bedingt ist. Alternativ oder zusätzlich können weitere kapillar fluidleitende Strukturen in dem Element 35 enthalten sein, welche Teil des geometrischen Designs sind. In jedem Fall ermöglicht die Kapillarstruktur 35 einen kapillaren Flüssigkeitstransport von dem kondensierten Arbeitsmedium F vom Kondensatorbereich 24 zum Verdampferbereich 26. Hierzu kann sich die Kapillarstruktur zwischen diesen beiden Bereichen 24 und 26 erstrecken, also mit anderen Worten den gesamten Abstand zwischen ihnen überbrücken. Wie beim Beispiel der Figur 2 gezeigt ist, muss sie jedoch nicht den ganzen Medienraum 22 ausfüllen, sondern es ist vorteilhaft, wenn freie Bereiche als Gasraum G verbleiben, um das verdampfte Arbeitsmedium F effektiv zum Kondensatorbereich 24 zurückzuführen. Die Kapillarstruktur 35 kann im Verdampferbereich 26 einen überwiegenden Teil der Oberfläche des zweiten Wandelements 32 bedecken und diese insbesondere sogar im Wesentlichen vollständig bedecken, um einen effizienten Rücktransport des Kondensats in diesen Bereich zu erleichtern. Eine geodätisch tieferliegende Anordnung des Verdampferbereichs 26 kann diesen Rücktransport zusätzlich erleichtern. Demgegenüber ist es vorteilhaft, wenn im Kondensatorbereich 24 freie Flächenabschnitte 36 in der Oberfläche des ersten Wandelements 31 zur Verfügung stehen, welche nicht mit der Kapillarstruktur 35 belegt sind. Auf diese Weise kann das Arbeitsmedium F direkt auf der glatten Oberfläche des ersten Wandelements 31 kondensieren, die dort nicht dauerhaft mit einem Kondensatfilm überzogenen ist. Durch die dicht benachbarte Kapillarstruktur 35 kann von diesen freien Flächenabschnitten 36 trotzdem ein effizienter Abtransport von Kondensat erfolgen.

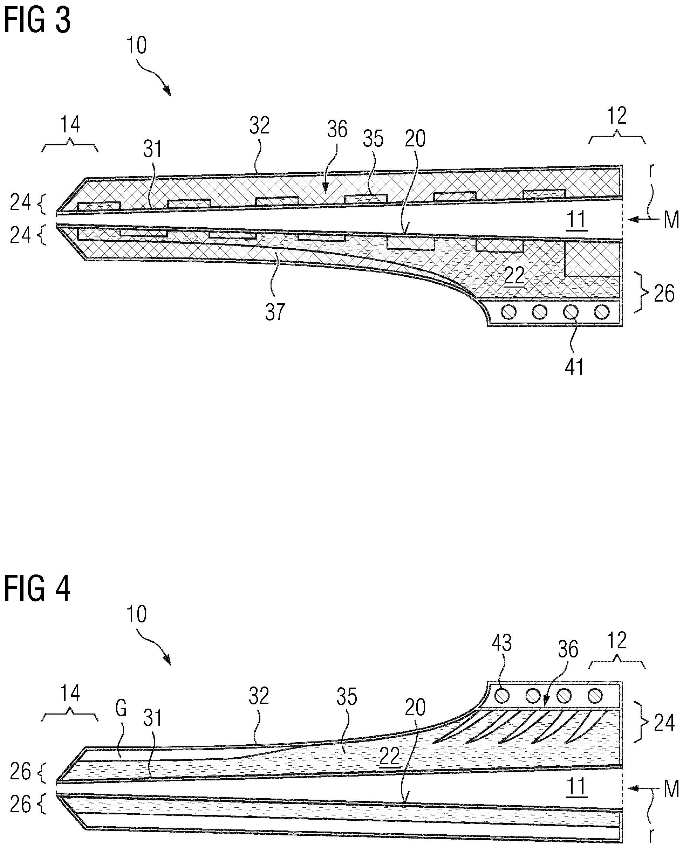

Figur 3 zeigt eine detailliertere Darstellung der Extrusionsdüse 10 der Figur 2, wobei zusätzlich zu den bereits beschriebenen Elementen ein optionales zusätzliches Stützgitter 37 dargestellt ist. Das Stützgitter 37 ist ebenfalls monolithisch mit der Kapillarstruktur 35 und den beiden Wandelement 31, 32 in demselben additiven Fertigungsverfahren hergestellt. Das Stützgitter 37 ist insbesondere aus einer Vielzahl von Gitterstäben zusammengesetzt und erstreckt sich von dem innenliegenden ersten Wandelement 31 zum außenliegenden zweiten Wandelement. Hierdurch wird eine mechanische Abstützung des vergleichsweise dünnen ersten Wandelements 31 gegen das vergleichsweise dicke zweite Wandelement 32 erreicht. Im Bereich des Gasraums G liegt zwischen den einzelnen Gitterstäben ein großer Anteil von offenem Volumen vor, welcher von dem verdampften Arbeitsmedium eingenommen werden kann. Im Bereich der Kapillarstruktur 35 durchdringt das Stützgitter 37 diese lokal, so dass auch hier ein effizienter Transport des Kondensats und gleichzeitig eine wirksame mechanische Abstützung erzielt werden kann. Bei Vorliegen eines solchen zusätzlichen Stützgitters 37 kann das erste Wandelement besonders dünn ausgeführt werden und trotzdem hohen Druckkräften auf die Prozessfläche 20 standhalten. Durch diese dünne Ausführung kann eine besonders gute thermische Ankopplung der Prozessfläche 20 an das fluide Arbeitsmedium F und damit eine effektive Temperierung der Prozessfläche 20 über das Wärmerohr-Prinzip erreicht werden. Die Extrusionsdüse 10 kann außerdem ein oder mehrere in den Figuren nicht dargestellte Entpulverungsöffnungen aufweisen, welche zur Entfernung von überschüssigem Metallpulver aus dem additiven Fertigungsverfahren dienen. Über solche Öffnungen kann der Medienraum 22 auch evakuiert und anschließend mit dem Arbeitsfluid befüllt werden, bevor die Öffnungen gasdicht verschlossen werden.

In Figur 4 ist ein Formungselement nach einem zweiten Beispiel der Erfindung in einem ähnlichen schematischen Längsschnitt gezeigt. Auch hier ist das Formungselement als Extrusionsdüse 10 mit einem innenliegenden Düsenkanal 11 ausgestaltet. Die Formgebung und Wirkungsweise dieses Düsenkanals bei der Extrusion des hindurchgepressten Materials M sind analog zum vorhergehenden Beispiel. Im Unterschied dazu ist der den Kanal umgebende Medienraum jedoch zum Kühlen der Prozessfläche 20 (im Verhältnis zur äußeren Umgebung) ausgestaltet. Entsprechend ist also der Verdampferbereich 26 des Wärmerohr-Systems im Bereich des ersten Wandelements 31 angeordnet, und der Kondensatorbereich 24 ist in einem Teilbereich des außenliegenden zweiten Wandelements 32 angeordnet. Auch hier erstreckt sich zwischen diesen Bereichen 24, 26 eine Kapillarstruktur 35, um mit kapillar fluidleitenden Kanälen einen Rücktransport des Kondensats vom Kondensatorbereich 24 zum Verdampferbereich 26 zu fördern. Dies wird durch die Schwerkraft unterstützt, da der Kondensatorbereich 24 auch hier geodätisch höher liegt. In dem entsprechenden Teilbereich ist das zweite Wandelement mit einigen Kühlelementen 43 versehen, über die Wärme aus dem Kondensatorbereich 24 abtransportiert werden kann. Hier kann es sich beispielsweise um Kanäle mit einer zirkulierenden Kühlflüssigkeit handeln oder auch um Peltier-Elemente.

Entsprechend der entgegengesetzten Wirkrichtung des Wärmerohr-Systems ist auch die Kapillarstruktur 35 anders ausgestaltet als beim vorhergehenden Beispiel: Auch hier ist sie so ausgedehnt, dass sie den Abstand zwischen Kondensatorbereich 24 und Verdampferbereich 26 überbrückt. Im Kondensatorbereich 24 bedeckt sie die Oberfläche des zweiten Wandelements jedoch nicht vollständig, sondern es liegen freie Flächenabschnitte 36 vor, in denen das Arbeitsmedium direkt an der offenen metallischen Oberfläche des zweiten Wandelements 32 kondensieren kann. Im Verdampferbereich dagegen ist hier eine im Wesentlichen vollständige Belegung des ersten Wandelements 31 mit der Kapillarstruktur 35 gegeben.

Die Ausgestaltungen der Kapillarstrukturen 35 in den beiden vorhergehenden Beispielen sind nur exemplarisch zu verstehen und sollen die Unterschiede der beiden Wirkrichtungen verdeutlichen. In anderen Ausführungen können auch andere Bedeckungsgrade vorliegen, und es sich auch Ausgestaltungen möglich, bei denen die Wirkrichtung umkehrbar ist. Hierzu können sowohl in der Umgebung des ersten Wandelements 31 als auch im relevanten Bereich des zweiten Wandelements anteilige Bedeckungen mit der Kapillarstruktur vorliegen. Allgemein kann die Kapillarstruktur im Kondensatorbereich 24 und/oder Verdampferbereich 26 auch mit zusätzlichen (hier nicht dargestellten) offenen Kanälen durchdrungen sein, um eine offene Verbindung der relevanten Bereiche 24, 26 zum freiliegenden Gasraum zu schaffen und einen besonders effizienten Transport von verdampftem Arbeitsmedium vom Verdampferbereich 26 zurück zum Kondensatorbereich 24 zu ermöglichen. Auch kann sich die Kapillarstruktur 35 allgemein zu den jeweils zu entwärmenden bzw. zu erwärmenden Oberflächen verzweigen und/oder verjüngen, um die jeweilige Oberfläche sowohl an den Gasraum als auch an den Kondensat-Fluss effizient anzubinden. Allgemein kann beim Ausführungsbeispiel der Figur 4 ebenfalls eine optionale Stützstruktur vorliegen. Dies kann insbesondere ein Stützgitter sein, welches analog zum vorhergehenden Beispiel ausgebildet ist und hier nur der Übersichtlichkeit halber nicht gezeigt ist.

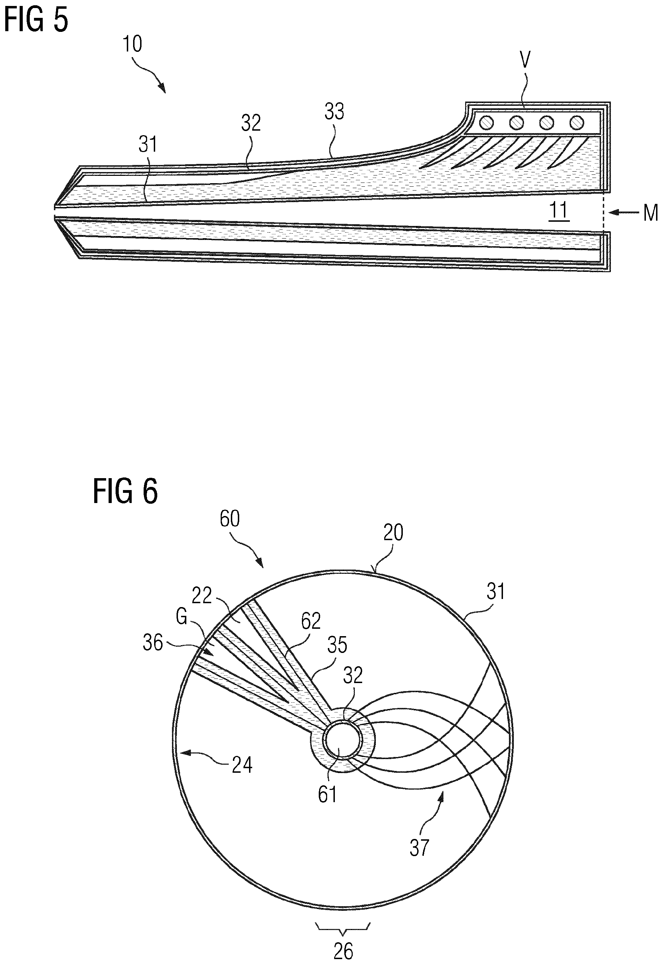

In Figur 5 ist eine Variante des vorhergehenden Ausführungsbeispiels gezeigt, bei welchem das zweite Wandelement von einem zusätzlichen dritten Wandelement 33 umgeben ist. Zwischen diesen beiden Wandelementen 32,33 ist ein Vakuumraum V ausgebildet, so dass insgesamt zur äußeren Umgebung hin eine zusätzliche Vakuumisolation gegeben ist. Dies erleichtert die Temperierung der Prozessfläche 20 und erleichtert insbesondere die Ausbildung einer größeren Temperaturdifferenz zur äu-βeren Umgebung. Auch bei der Ausführungsform der Figuren 2 und 3 (also bei der Variante mit einer beheizten Prozessfläche 20) kann optional ein solcher zusätzlicher Vakuummantel vorliegen. Ein solcher Vakuummantel muss das Formungselement auch nicht zwangsläufig vollständig umschließen. Eine lokale Verbesserung der thermischen Isolation gegen die äußere Umgebung kann schon ausreichen, um die Temperierung der Prozessfläche zu erleichtern. Optional kann auch der Vakuummantel durch eine ebenfalls additiv hergestellte innenliegende Gitterstruktur mechanisch abgestützt sein.

In Figur 6 ist ein Formungselement nach einem weiteren Ausführungsbeispiel der Erfindung gezeigt. In diesem Beispiel ist das Formungselement als Kalanderwalze 60 ausgestaltet. Beim Hindurchpressen eines zu formenden Materials zwischen zwei solchen Walzen kann ebenfalls eine Formgebung eines herzustellenden Produkts und insbesondere eine Aufbringung bzw. Formung von flächigen Schichten erreicht werden. Im Unterschied zu den vorhergehenden Beispielen liegt bei einer solchen Walze die Prozessfläche 20, die mit dem Material in Berührung kommt, außen. Die Kalanderwalze 60 ist auf einer innenliegenden Welle 61 drehbar gelagert. Typischerweise kann der Abstand zwischen zwei solchen benachbarten Walzen und der Anpressdruck, der zwischen ihnen wirkt, entsprechend den Zielvorgaben eingestellt werden.

Bei der Kalanderwalze 61 der Figur 6 wird die Temperierung der Prozessfläche 20 durch radial innerhalb des ersten Wandelements 31 liegende Medienkammer 22 erreicht. Diese Medienkammer kann sich - wie hier gezeigt - über den gesamten Umfang der Walze erstrecken oder auch in einzelne Umfangssegmente unterteilt sein. Radial innenliegend ist die Medienkammer wiederum durch ein zweites Wandelement 32 begrenzt, welches z.B. eine Außenwand einer Hohlwelle sein kann. Das Vorliegen eines zweiten Wandelements ist jedoch nicht zwingend erforderlich: Alternativ kann die Medienkammer auch durch ein anderes Element begrenzt sein, z.B. durch die Außenfläche einer massiven Welle. Bei der Ausführungsform der Figur 6 ist in der Umgebung des ersten Wandelements der Kondensatorbereich 24 des Wärmerohr-Systems ausgebildet, und in der Umgebung der Welle 61 (und insbesondere des zweiten Wandelements 32) ist der Verdampferbereich 26 ausgebildet. Die Wirkrichtung ist damit analog zum Beispiel der Figuren 2 und 3, und die Prozessfläche 20 kann über die Medienkammer 22 im Verhältnis zur äußeren Umgebung beheizt werden. Um dies zu fördern, können im Bereich der Welle 61 ein oder mehrere hier nicht dargestellte Heizelemente angeordnet sein. Alternativ kann aber auch die umgekehrte Wirkrichtung des Wärmerohr-Systems in einer solchen Kalanderwalze 60 realisiert sein.

Auch beim Beispiel der Figur 60 ist der Medienraum 22 mit einer oder mehreren Kapillarstrukturen 35 versehen, um das kondensierte Arbeitsmedium F vom Kondensatorbereich 24 zurück zum Verdampferbereich 26 zu fördern. Ebenso ist hier eine Vielzahl von Stützelementen vorgesehen, um das außenliegende erste Wandelement 31 mechanisch gegen die Welle 61 (und insbesondere das dort vorliegende zweite Wandelement 62) abzustützen. Eine solche mechanische Abstützung kann unterschiedlich realisiert sein, und es sind in Figur 6 zwei unterschiedliche Ausführungen skizziert: So sind im linken Teil der Figur 6 drei gerade Stützstreben 62 gezeigt, die nach Art von Speichen eine Abstützung des außenliegenden ersten Wandelements 32 geben die Welle 61 bewirken. Solche Stützstreben 62 können sich entsprechend über den ganzen Umfang der Kalanderwalze 60 verteilen. An den einzelnen Stützstreben 62 können jeweils Teilbereiche einer übergeordneten Kapillarstruktur 35 vorgesehen sein, welche ähnlich wie bei den vorhergehenden Beispielen den Abstand zwischen dem Kondensatorbereich 24 und dem Verdampferbereich 36 überbrücken. Zwischen diesen Abschnitten sind aber auch freie Bereiche vorgesehen, in denen sich entsprechend ein Gasraum G ausbildet. Im radial innenliegenden Verdampferbereich 26 ist das zweite Wandelement 32 mantelförmig von der Kapillarstruktur 35 umgeben. Demgegenüber sind im Kondensatorbereich 24 freie Flächenbereiche 36 vorgesehen, die nicht von der Kapillarstruktur 35 bedeckt sind und in denen das Arbeitsmedium F an der freiliegenden Oberfläche des ersten Wandelements 31 kondensieren kann. Eine weitere Ausführungsform für die Stützelemente ist im rechten Teil der Figur 6 skizziert: So kann auch hier ein Stützgitter 37 vorliegen, durch welches das erste Wandelement 31 nach radial innen gegen die Welle 61 abgestützt ist. Ein solches Stützgitter weist eine Vielzahl von sich kreuzenden Gitterstreben auf, welche allgemein entweder gerade oder gekrümmt sein können. Dieses Stützgitter 37 kann insbesondere eine sogenannte Michell-Struktur ausbilden. Mit anderen Worten kann sie die von A.G.M. Michell in der folgenden Veröffentlichung aufgestellten Kriterien erfüllen: "The limits of economy of material in frame-structures", Philosophical Magazine, Vol. 8(47), p. 589-597. Allgemein und unabhängig von der genauen geometrischen Ausformung können auch solche sich kreuzende Gitterstreben jeweils (zumindest teilweise) von einer entsprechenden Kapillarstruktur umgeben sein und diese auf der Strecke zwischen dem ersten Wandelement 31 und der innenliegenden Welle 61 mechanisch stützen, ähnlich wie dies im linken Teil der Figur 6 für die geraden Gitterstäbe 62 skizziert ist.

Die Anmelderin weist an dieser Stelle darauf hin, dass unabhängig vom grammatikalischen Geschlecht eines bestimmten personenbezogenen Begriffs stets Personen mit männlicher, weiblicher und anderer Geschlechteridentität mit umfasst sein sollen.

### Bezugszeichenliste

- 10: Formungselement (Extrusionsdüse)
- 11: Düsenkanal
- 12: Eingangsbereich
- 13: Kanaleinlass
- 14: Austrittsbereich
- 15: Kanalauslass
- 20: Prozessfläche
- 22: Medienraum
- 24: Kondensatorbereich
- 26: Verdampferbereich
- 31: erstes Wandelement
- 32: zweites Wandelement
- 33: drittes Wandelement
- 35: Kapillarstruktur
- 36: freier Flächenabschnitt
- 37: Stützgitter
- 41: Heizelement
- 43: Kühlelement
- 60: Formungselement (Kalanderwalze)
- 61: Welle
- 62: Stützstreben
- F: fluides Arbeitsmedium
- G: Gasraum
- M: zu verarbeitendes Material
- r: Transportrichtung des Materials
- V: Vakuumraum

## Patentansprüche

1. Formungselement (10,60) für einen Prozess, insbesondere ein Fertigungsverfahren, bei welchem ein zu verarbeitendes Material (M) geformt wird, mit
- einer Prozessfläche (20) zur Formung des Materials (M) und
- einem im Inneren des Formungselements (10,60) angeordneten abgeschlossenen Medienraum (22), in welchem ein fluides Arbeitsmedium (F) nach dem Wirkprinzip eines Wärmerohrs zirkulierbar ist,
- wobei der Medienraum (22) einen Verdampferbereich (26) und einen Kondensatorbereich (24) aufweist, wobei wenigstens einer dieser beiden Bereiche (24,26) thermisch so mit der Prozessfläche (20) gekoppelt ist, dass diese durch das zirkulierende Arbeitsmedium (F) temperierbar ist,
- wobei der Medienraum (22) zur Prozessfläche (20) hin durch ein fluiddichtes erstes Wandelement (31) begrenzt ist,
- wobei der Medienraum (22) eine innenliegende Kapillarstruktur (35) mit einer Mehrzahl an kapillar fluidleitenden Kanälen aufweist.

2. Formungselement nach Anspruch 1, welches als Extrusionsdüse (10) oder als Kalanderwalze (60) ausgestaltet ist.

3. Formungselement (10,60) nach einem der Ansprüche 1 oder 2, bei welchem die Kapillarstruktur (35) monolithisch mit dem ersten Wandelement (31) ausgebildet ist.

4. Formungselement (10,60) nach einem der vorhergehenden Ansprüche, bei welchem die Kapillarstruktur (35) und das erste Wandelement (31) aus einem metallischen Material gebildet sind.

5. Formungselement (10,60) nach einem der vorhergehenden Ansprüche, bei welchem zumindest die Kapillarstruktur (35) und das erste Wandelement (31) mit einem additiven Herstellungsverfahren hergestellt sind.

6. Formungselement (10,60) nach Anspruch 5, bei welchem das additive Herstellungsverfahren ein pulverbettbasiertes Verfahren ist.

7. Formungselement (10,60) nach einem der vorhergehenden Ansprüche, welches eine mit dem ersten Wandelement (31) monolithisch in Verbindung stehende Stützstruktur (37,62) aufweist.

8. Formungselement (10,60) nach einem der vorhergehenden Ansprüche, bei welchem die Kapillarstruktur (35) eine offene Porosität zwischen 5% und 70% aufweist.

9. Formungselement (10,60) nach einem der vorhergehenden Ansprüche, bei welchem die fluidleitenden Kanäle der Kapillarstruktur (35) einen mittleren Kanaldurchmesser zwischen 10 µm und 1000 µm, insbesondere zwischen 30 µm und 500 µm, aufweisen.

10. Formungselement (10,60) nach einem der vorhergehenden Ansprüche, bei welchem das erste Wandelement (31) eine Wandstärke zwischen 0,1 mm und 4 mm, insbesondere zwischen 0,5 mm und 2 mm, aufweist.

11. Formungselement (10,60) nach einem der Ansprüche 1 bis 10, bei welchem das erste Wandelement (31) eine über den Verlauf der Prozessfläche (20) einheitliche Wandstärke aufweist.

12. Formungselement (10,60) nach einem der Ansprüche 1 bis 10, bei welchem das erste Wandelement (31) eine über den Verlauf der Prozessfläche (20) variierende Wandstärke aufweist.

13. Formungselement (10,60) nach einem der vorhergehenden Ansprüche, bei welchem der Medienraum (22) von einem zusätzlichen Vakuummantel (33) umgeben ist.

14. Fertigungsverfahren, bei welchem ein zu verarbeitendes Material (M) mit einem Formungselement (10,60) nach einem der Ansprüche 1 bis 13 geformt wird.

15. Verfahren zur Herstellung eines Formungselements (10,60) nach einem der Ansprüche 1 bis 13, wobei das Verfahren ein additives Herstellungsverfahren ist oder einen additiven Verfahrensschritt umfasst.
